Europäisches Patentamt

**European Patent Office**

**Office européen des brevets**

(19)

(11) Numéro de publication: **0 065 894**
A1

(12) # DEMANDE DE BREVET EUROPEEN

(21) Numéro de dépôt: **82400768.6**

(22) Date de dépôt: **28.04.82**

(51) Int. Cl.³: **G 02 F 1/17**

(30) Priorité: **30.04.81 FR 8108689**

(43) Date de publication de la demande:
**01.12.82 Bulletin 82/48**

(84) Etats contractants désignés:
**AT BE CH DE FR GB IT LI LU NL SE**

(71) Demandeur: **JAEGER**
**2, rue Baudin**
**F-92303 Levallois-Perret(FR)**

(72) Inventeur: **Pompei Katz de Warrens, Jean**
**7, résidence de la Gaillarderie**
**F-78590 Noisy-Le-Roy(FR)**

(74) Mandataire: **Corre, Jacques Denis Paul et al,**
**Cabinet Regimbeau 26, Avenue Kléber**
**F-75116 Paris(FR)**

(54) **Cellule d'affichage électrolytique à lame arrière transparente.**

(57) La présente invention concerne une cellule d'affichage électrolytique à lame arrière transparente du type comportant une électrode de forme adaptée à l'affichage de données; une électrode de référence ; une composition électrolytique liquide ; un carter transparent contenant ladite composition électrolytique liquide qui baigne les électrodes, et des moyens d'alimentation en courant électrique continu des électrode et contre-électrode.

ELle est caractérisée en ce que l'électrode de référence 18 est constituée par une lame transparente composée d'une première couche (20) d'au moins un matériau conducteur, transparent et neutre du point de vue électrochimique, cette première couche étant revêtue du côté de l'électrolyte (22) par une seconde couche transparente (24) d'un métal compatible.

EP 0 065 894 A1

./...

CELLULE D'AFFICHAGE ELECTROLYTIQUE A LAME ARRIERE
TRANSPARENTE.

La présente invention concerne une cellule électrolytique à lame arrière transparente destinée à assurer l'affichage et l'écriture de symboles ou données dont les configurations peuvent être modifiées électriquement.

Les cellules d'affichage électrolytiques de la
technique antérieure comprennent, de façon tout à fait
classique, un électrolyte à base de sels métalliques,
intercalé entre deux électrodes dont l'une au moins
présente une forme adaptée à l'affichage. Ces deux
électrodes sont reliées à des moyens d'alimentation en
courant électrique continu, afin de permettre l'établissement d'une réaction électrochimique réversible d'oxydo-
réduction destinée à provoquer un dépôt métallique sur
l'électrode ou la dissolution d'une couche métallique,
respectivement en vue de l'affichage ou de l'effacement.

Dans la technique antérieure, il a en particulier
été proposé de faire appel à une contre-électrode
réalisée en deux couches superposées dont la couche
interne, au contact permanent de l'électrolyte, est
constituée par le métal qui participe à la réaction
électrochimique et qui se dépose sur l'électrode
en vue de l'affichage. Il peut par exemple s'agir
d'une couche d'argent qui constitue ainsi une
réserve de ce métal, destinée à améliorer la durée de
vie de la cellule électrolytique. Une telle technique présente cependant un certain nombre d'inconvénients dans la pratique, parmi lesquels on peut citer tout d'abord l'élévation du coût de la cellule, consécutivement à la présence d'une couche supplémentaire d'argent déposée par sérigraphie puis soumise à une opération de recuit. De plus, on observe des irrégularités de fonctionnement des afficheurs de ce type lorsque la couche d'argent sérigraphiée déposée sur un fond conducteur, par exemple en platine, est décalée par rapport à ce dernier ou bien est poreuse. De surcroît, une telle cellule d'affichage présente un fond coloré qui est soumis à plusieurs contraintes. Il doit tout d'abord être poreux pour permettre le passage des ions de l'électrolyte à l'électrode d'argent. Il doit résister à la température de scellement qui est de l'ordre de 450°C, ce qui exclut tous les pigments organiques. Enfin, il ne doit pas contaminer l'électrolyte, ni réagir avec l'argent, ce qui exclut l'utilisation de tous les pigments minéraux sulfurés ou halogénés. Le choix des pigments se trouve donc limité aux oxydes métalliques et parmi ceux-ci les teintes sont très peu variées.

Or, il est très souhaitable de pouvoir disposer d'une gamme étendue de couleurs d'écriture et de fonds colorés, en particulier lorsqu'on destine ce type de cellule d'affichage à l'équipement de tableaux de bord de véhicules ou d'avions.

En outre, le gel de silice souvent utilisé dans la technique antérieure pour augmenter la porosité du fond coloré possède une certaine quantité de molécules d'eau de constitution qu'il est difficile de supprimer complètement par déshydratation thermique. La perte possible de ces molécules d'eau au contact de l'électrolyte provoque une dégradation de ce dernier ainsi que l'apparition de tâches brunes influençant de façon très défavorable la qualité de l'affichage.

La présente invention a précisément pour objet d'éviter les inconvénients précités inhérents à ce type de cellules de la technique antérieure, tout en obtenant une cellule présentant un affichage d'excellente qualité ainsi qu'une longue durée de vie.

Conformément à la présente invention, la cellule d'affichage électrolytique est caractérisée en ce qu'elle comporte une électrode de référence constituée par une lame transparente composée d'une première couche d'au moins un matériau conducteur, transparent et neutre du point de vue électrochimique, cette première couche étant revêtue du côté de l'électrolyte par une seconde couche transparente d'un métal compatible.

De façon préférentielle, le matériau composant ladite première couche sera constitué par au moins un oxyde métallique, par exemple par au moins un oxyde de métal choisi parmi les métaux des groupes IIB, IIIB et IVB de la classification périodique ou par au moins un oxyde mixte de ces métaux.

Selon une autre caractéristique de la présente invention, la seconde couche transparente de métal compatible avec la couche d'oxyde est constituée par une couche mince mais continue d'or ou de platine.

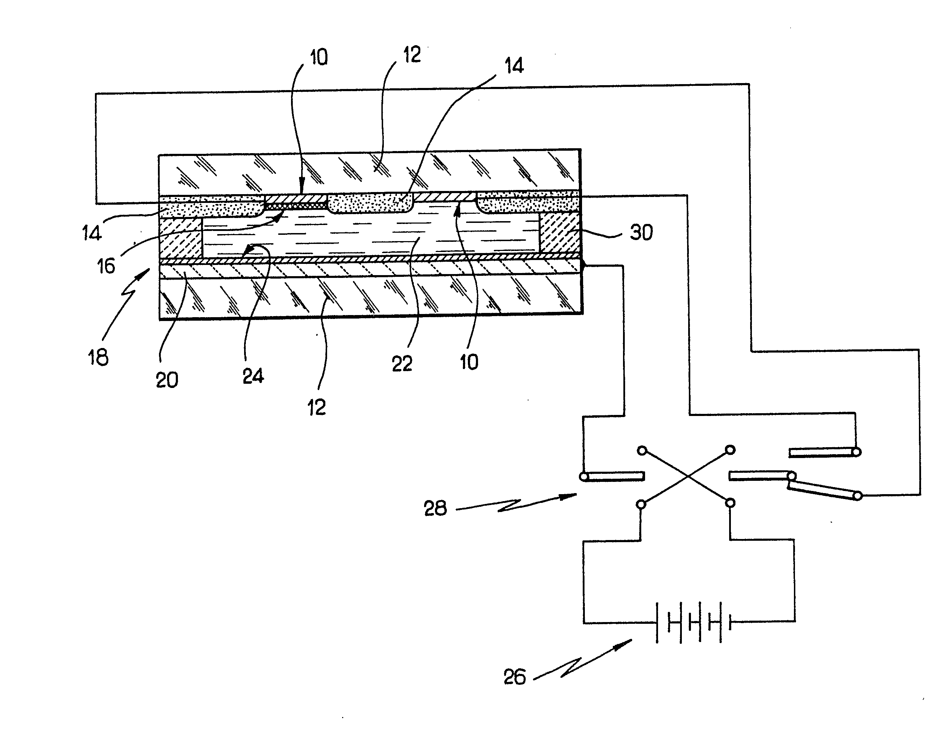

D'autres caractéristiques et avantages de la présente invention apparaîtront à la lecture de la description détaillée faite ci-après notamment en référence au dessin unique annexé qui représente schématiquement un mode de réalisation particulier d'une cellule électrolytique selon l'invention.

Selon une première variante de l'invention, la cellule d'affichage électrolytique comporte de façon classique une électrode de forme

adaptée à l'affichage de données. Cette électrode peut par exemple être réalisée sous la forme d'une matrice de segments ou de points. Dans l'exemple illustré, l'électrode est constituée par des segments 10 déposés de façon classique sur la paroi transparente 12 du carter de la cellule. Les segments 10 peuvent par exemple être séparés entre eux par une couche d'isolant 14. La nature précise de l'électrode de forme adaptée à l'affichage de données ne constitue pas la caractéristique essentielle de l'objet de la présente invention, et pourra donc être remplacée par tout autre type d'électrodes connues sur lesquelles une couche de métal 16, tel que l'argent, peut être déposée électrolytiquement.

La cellule d'affichage électrolytique de la figure annexée comporte, du côté opposé à l'électrode 10, une électrode de référence jouant le rôle de contre-électrode 18. Selon la présente invention, l'électrode de référence, ici la contre-électrode 18, est constituée par une lame transparente métallique conducteur transparent et neutre du point de vue électrochimique. Selon l'invention, cette première couche d'oxyde métallique est avantageusement constituée par au moins un oxyde d'un métal choisi parmi les métaux des groupes IIB, IIIB et IVB de la classification périodique des éléments ou encore par au moins un oxyde mixte de ces mêmes métaux. A titre d'exemple particulier de tels oxydes métalliques, on mentionnera les oxydes de cadmium, d'indium, d'étain et d'antimoine, ainsi que les oxydes mixtes de ces métaux parmi lesquels on peut citer l'oxyde d'indium-étain.

Cette première couche 20 est revêtue, du côté de l'électrolyte 22 par une seconde couche transparente interne 24 d'un métal compatible. Par métal compatible, on entend principalement un métal non susceptible de diffuser au sein de la première couche d'oxyde métallique 20. A titre d'exemple de tel métal on mentionnera l'or et le platine, l'utilisation du platine étant toutefois préférée.

Selon une caractéristique essentielle de la présente invention, l'électrode de référence ou lame 18 doit être transparente. En conséquence, on choisira pour la couche d'oxyde 20 de préférence une couche d'une épaisseur inférieure à 1 micron, et pour la couche de métal 24 une couche ayant une épaisseur de préférence inférieure à 100 Å. L'épaisseur minimale de la couche de métal 24 sera déterminée dans la pratique de manière à obtenir le dépôt d'un film parfaitement continu. De telles lames 18 peuvent par exemple être obtenues de façon satisfaisante à l'aide d'un dispositif de pulvérisation radiofréquence multicible. La superposition des couches se fait par échange des cibles et/ou du gaz de décharge. Un système multicible à cibles fixes, mais avec possibilité de mouvement relatif des substrats et de masques par rapport aux cibles pourrait également parfaitement convenir.

Conformément à la présente invention, l'électrode (10, 14) et l'électrode de référence 18 sont baignées par une composition électrolytique liquide 22 qui est apte à conduire à une réaction électrochimique réversible d'oxydo-réduction destinée à provoquer le dépôt sur l'électrode ou la dissolution d'une couche métallique 16, respectivement en vue de l'affichage ou de l'effacement des données.

Dans la pratique, l'électrolyte peut par exemple être constitué par un mélange $NaI/AgI/AuI_3$ dissous dans un solvant organique, par exemple dans un mélange d'alcool méthylique et d'acétonitrile.

Le dispositif selon l'invention contient en outre des moyens d'alimentation en courant électrique continu 26 de l'électrode 10 et de la contre-électrode 18. Tels que représentés schématiquement sur le dessin annexé, ces moyens incorporent un dispositif commutateur à inversion de sens de courant 28 , de manière à pouvoir assurer le dépôt d'une couche d'argent 16 sur les électrodes 10 ou la dissolution de cette couche d'argent, en fonction précisément de la polarité de l'électrode.

Selon un mode de réalisation particulier de la présente invention, l'électrode 10 et l'électrode de référence 18 sont appliquées sur des parois transparentes 12 réalisées en verre ou en polyméthacrylate de méthyle et définissant, avec l'interposition de cales d'épaisseur 30, le carter de la cellule d'affichage selon l'invention.

Selon un mode de réalisation particulier de la présente invention, la cellule d'affichage peut être conçue de manière que l'électrode de référence transparente 18 détermine elle-même la paroi arrière du carter contenant l'électrolyte.

Selon une variante de la présente invention, l'électrode de référence transparente 18 présente sur sa face externe une couche de peinture diffusante. Etant donné que cette couche de peinture diffusante ne risque absolument plus d'entrer en contact avec l'électrolyte, il devient ainsi possible d'avoir recours à une gamme très étendue de couleurs.

La cellule d'affichage électrolytique selon l'invention comporte également de façon classique une source lumineuse éclairant cette cellule. Cette source lumineuse, non représentée sur le dessin annexé, peut être disposée à l'avant ou à l'arrière de la cellule, du même côté ou du côté opposé à l'oeil de l'observateur, suivant que l'on désire utiliser la cellule en transmission ou en réflexion. Il est clair que la présente invention permet, du fait notamment de la transparence de la lame 18, d'avoir recours à diverses possibilités, parmi lesquelles on peut citer une vision avant avec un éclairage arrière et une écriture noire sur fond clair, noire sur fond coloré, claire sur fond noir ou colorée sur fond noir, ou encore une vision arrière avec un éclairage avant et une vision arrière avec un éclairage arrière avec les mêmes types d'écritures que précédemment.

On précisera enfin que la coloration peut être obtenue indifféremment par application de peinture diffusante sur la face extérieure ou encore par la présence de filtres appropriés sur la source de lumière. En utilisant des guides de lumière on peut combiner les deux possibilités et obtenir sur le même afficheur une très grande variété de couleurs différentes.

On précisera enfin que la présente invention permet, dans le cas d'afficheurs à écriture claire et colorée sur fond noir, d'augmenter l'effet polarisant de la surface dépolie sur laquelle sont déposées les couches de face avant de la cellule, d'améliorer le contraste et ainsi de permettre la projection à l'aide d'un dispositif approprié de l'image agrandie de la face avant.

Enfin, l'oxyde conducteur et transparent dont le rôle essentiel est d'abaisser la résistance de la couche très mince et imperméable de métal, par exemple d'or ou de platine, peut être choisi pour ses propriétés optiques de réfraction (filtre interférentiel) ou d'absorption (transparence sélective) sans tenir compte de ses propriétés chimiques et électrochimiques. On précisera que dans la pratique, en faisant appel à un oxyde d'indium et d'étain (80-20), avec des épaisseurs

différentes de 2500 Å à 8000 Å , il a été possible d'obtenir des couleurs interférentielles couvrant tout le second ordre dans l'échelle de Newton. L'utilisation d'autres oxydes à transparence jaune tel que CdO, ou rouge tel que PbO avec d'autres oxydes tels que l'oxyde d'étain dopé, l'oxyde d'étain et d'antimoine ou diverses compositions ou juxtapositions, susceptibles d'allier une bonne conductibilité électrique aux effets optiques recherchés (filtrage ou coloration, contraste) est également parfaitement possible.

On précisera enfin que, sans pour autant sortir du cadre de la présente invention, il est également possible pour atteindre ces effets d'incorporer à un niveau inférieur ou intermédiaire une ou plusieurs couches métalliques localisées ou uniformément réparties sur la surface de la couche d'oxyde.

A simple titre d'illustration, on mentionnera ci-après les caractéristiques d'un exemple particulier de cellule d'affichage selon l'invention:

- système électrolytique :

$NaI/AgI/AuI_3/AuI/I_2$

- solvant : acétonitrile (1/3)- alcool méthylique (2/3)

- électrode : argent

- contre-électrode : Ag (50 Å) + Pt (500 Å)

- épaisseur de l'électrolyte : 200 μ

- tension maximale appliquée : 1 volt

- densité de courant 25 mA/$cm^2$

- temps de dépôt : 15/100 de sec.

- temps de dissolution: 20/100 de sec.

- variation de densité optique : 0,5 environ

- vitesse de commutation maximale : 1 cycle/sec.

- durée de vie : 10 000 heures

- parfaite tenue aux températures inférieures à 90°C.

Dans la première variante précédemment décrite de la présente invention, la lame arrière transparente jouait le rôle classique d'une véritable contre-électrode métallique raccordée au circuit d'alimentation en courant électrique continu et située sur la face arrière de la cellule d'affichage.

Dans une seconde variante de l'invention, la lame arrière transparente ne remplit plus que la fonction d'une électrode de référence qui se trouve donc isolée du circuit d'alimentation électrique, la contre-électrode étant, elle, située sur la face avant de la cellule. On se trouve ainsi en présence d'une structure de cellule comportant l'électrode d'affichage et la contre-électrode situées dans un même plan.

Dans pareille structure, l'électrode et la contre-électrode sont bien sûr reliées au circuit de commande.

Pour réaliser un tel type de cellule d'affichage à électrode et contre-électrode coplanaires, il convient de faire appel à un électrolyte particulier du type des électrolytes multiconstituant à potentiel défini décrit en détail dans une demande de brevet déposée ce même jour au nom de la demanderesse et dont les enseignements sont incorporés à la présente description.

Ces électrolytes multiconstituant particuliers peuvent être de type ($\alpha$), ($\beta$) et ($\gamma$) présentant un potentiel d'oxydo-réduction et un potentiel d'électrolytes défini, étant donné que la valeur moyenne des charges électriques dans chacun des membres de l'équilibre global d'oxydo-réduction de l'électrolyte est nulle. Comme la densité de charge volumique d'un tel milieu électrolyte est nulle, ce milieu est équipotentiel et son potentiel peut être pris comme référence quelle que soit la nature des électrodes. Dans le cas où les électrodes sont de même nature, les phénomènes d'écriture
et d'effacement ne dépendent plus de la différence de
potentiel qui leur est appliquée, et ce quelle que soit
leur disposition relative.

En conséquence, en faisant appel à des électrodes de type $(\alpha)$, $(\beta)$ et $(\gamma)$, à une électrode et une
contre-électrode de même nature, il est ainsi possible
de réaliser une structure de cellule à électrode coplanaire. En d'autres termes, cela signifie que la
contre-électrode peut être mise en place sur la même
lame, que l'électrode, par exemple la lame avant. Une
telle contre-électrode, bien sûr réalisée en un matériau
électroconducteur, peut par exemple simplement affecter
la forme d'un point:

Si l'on fait appel à un électrolyte multiconstituant de type particulier $(\omega)$, c'est l'électrode
de référence, isolée du circuit de commande, qui impose
son potentiel électrochimique à l'électrolyte $(\omega)$. Dans
pareil cas, la contre-électrode peut être agencée sur
la même face de la cellule que l'électrode et peut être
de n'importe quelle forme, de n'importe quelle nature et
de n'importe quelle taille. Elle devra toutefois bien
sûr être réalisée en un matériau électroconducteur en
vue de permettre son raccordement au circuit de commande.

Dans ces cas particuliers de cellules à
électrodes coplanaires, l'électrode de référence aura
toujours la même nature que celle définie précédemment
à propos de la première variante de l'invention. Une
telle structure coplanaire permet d'obtenir un certain
nombre d'avantages décisifs, elle permet notamment de
faciliter grandement les problèmes de connexion électrique. Cette structure coplanaire permet en outre de faire appel à un faible courant autorisant les résistances d'électrodes plus faibles à taille égale, ou bien des afficheurs de plus grande taille à résistance égale.

Diverses structures particulières de cellules d'affichage à électrodes coplanaires sont ainsi rendues possibles. C'est ainsi que l'on peut réaliser une cellule à électrodes coplanaires agencées sur la face avant ; une telle cellule peut fonctionner en écriture avant avec éclairage arrière ou bien en écriture arrière avec éclairage avant.

Il est également possible de réaliser une cellule d'affichage comportant des électrodes coplanaires disposées sur la face arrière avec écriture arrière et éclairage arrière. Il est enfin possible de réaliser des afficheurs doubles, c'est-à-dire d'équiper l'afficheur d'électrodes coplanaires aussi bien sur la face avant que sur la face arrière. On peut ainsi visualiser deux informations indépendantes ou complémentaires. Pour ce faire, on peut envisager une écriture avant et/ou arrière avec éclairage arrière ou encore une écriture avant et/ou arrière avec un éclairage avant.

La présente invention s'étend également à une cellule d'affichage électrolytique du type général précédemment décrit, caractérisée par le fait que l'électrode de référence est isolée du circuit d'alimentation en courant électrique continu, qu'elle impose un potentiel électrochimique, et que la contre-électrode, réalisée en une matière électroconductrice quelconque, est disposée sur la même face de la cellule que l'électrode de référence. Dans pareille variante, la contre-électrode, qu'elle soit transparente ou non, doit être disposée en regard de la zone d'affichage de la cellule. En revanche, l'électrode de référence peut être disposée n'importe où dans la cellule. Une telle variante conduit à une amélioration notable du fonctionnement et de la mémoire des cellules d'affichage.

Bien entendu, la présente invention n'est pas limitée par les modes de réalisation décrits, mais il est parfaitement possible sans pour autant sortir du cadre de la présente invention d'en imaginer un certain nombre de variantes de détail.

REVENDICATIONS

1/ Cellule d'affichage électrolytique du type comportant :

- une électrode (10) de forme adaptée à l'affichage de données ;
- une électrode de référence (18);
- une composition électrolytique liquide apte à conduire à une réaction électrochimique réversible d'oxydo-réduction destinée à provoquer un dépôt sur l'électrode (18) ou une dissolution d'une couche métallique respectivement en vue de l'affichage ou de l'effacement des données ;
- un carter transparent contenant ladite composition électrolytique liquide qui baigne les électrodes ;
- des moyens d'alimentation en courant électrique continu des électrodes ;
- une source lumineuse éclairant ladite cellule ;

caractérisée en ce que l'électrode de référence (18) est constituée par une lame transparente composée d'une première couche (20) d'au moins un matériau conducteur, transparent et neutre du point de vue électrochimique, cette première couche étant revêtue du côté de l'électrolyte (22) par une seconde couche transparente (24) d'un métal compatible.

2/ Cellule selon la revendication 1, caractérisée en ce que ledit matériau conducteur, transparent et neutre du point de vue électrochimique, est constitué par au moins un oxyde métallique.

3/ Cellule selon la revendication 2, caractérisée en ce que la première couche d'oxyde métallique est constituée par au moins un oxyde d'un métal choisi parmi les métaux des groupes IIB, IIIB et IVB de la classification périodique ou par au moins un oxyde mixte de tels métaux.

4/ Cellule selon la revendication 3, caractérisée en ce que l'oxyde est choisi parmi les oxydes des métaux suivants : cadmium, indium, étain et antimoine, ainsi que les oxydes mixtes de ces métaux.

5/ Cellule selon l'une des revendications 1 à 4, caractérisée en ce que la seconde couche transparente(24) de métal compatible est constituée par une couche mince d'or ou de platine.

6/ Cellule selon l'une des revendications 1 à 5, caractérisée en ce que la première couche d'oxyde métallique conducteur et transparent présente une épaisseur inférieure à 1 micron.

7/ Cellule selon l'une des revendications 1 à 6, caractérisée en ce que la seconde couche transparente(24) du métal compatible présente une épaisseur inférieure à 100 Å.

8/ Cellule selon l'une des revendications 1 à 7, caractérisée en ce que l'électrode de référence transparente(18) détermine elle-même la paroi arrière du carter contenant l'électrolyte (22).

9/ Cellule selon la revendication 8, caractérisée en ce que l'électrode de référence transparente (18) présente sur sa face externe une couche de peinture diffusante.

10/ Cellule selon l'une des revendications 1 à 9, caractérisée en ce que l'électrode de référence(18) joue le rôle de contre-électrode raccordée au circuit d'alimentation en courant électrique continu (26,28).

11/ Cellule selon l'une des revendications 1 à 9, caractérisée en ce que l'électrode de référence (18) est isolée du circuit d'alimentation en courant électrique continu, et que la contre-électrode, de même nature que l'électrode d'affichage (10), est disposée sur la même face de la cellule que l'électrode d'affichage (10).

12/ Cellule selon l'une des revendications 1 à 9, caractérisée en ce que l'électrode de référence (18) est isolée du circuit d'alimentation en courant électrique continu, qu'elle impose un potentiel électrochimique à l'électrolyte (22), et que la contre-électrode, réalisée en une matière électroconductrice quelconque, est disposée sur la même face de la cellule que l'électrode d'affichage.

13/ Cellule selon l'une des revendications 1 à 9, caractérisée en ce que l'électrode de référence (18) est isolée du circuit d'alimentation en courant électrique continu, qu'elle impose un potentiel électrochimique à l'électrolyte (22), et que la contre-électrode, réalisée en une matière électroconductrice quelconque, est disposée sur la même face de la cellule que l'électrode de référence.

10 12 14 30 10 22 12 24 20 16 18 14 28 26

Office européen
des brevets

# RAPPORT DE RECHERCHE EUROPEENNE

EP   82 40 0768

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | EP-A-0 001 955  (C.E.A.)  *Page  3, ligne 1 - page 4, ligne 22* | 1-4,6, 7 | G 02 F    1/17 |
| A | FR-A-2 221 775  (PHILIPS) *Page 3, lignes 21-28* | 1,5 | |
| A | FR-A-2 131 993  (IBM)  *Page 2, lignes 18-21; figure 2* | 1,5,11 ,12 | |
| A | EP-A-0 006 811  (C.E.A.) *Page 4, ligne 11 - page 6, ligne 9; revendication 1* | 1,8,10 | |
| A | US-A-4 184 751  (M.M.NICHOLSON)  *Colonne  3, ligne 5 - colonne 6, ligne  7;  colonne  7, ligne 38 - colonne  10,  ligne  16;  figures 2-4* | 1,9,11 -13 | |

---

| | | | DOMAINES TECHNIQUES RECHERCHES (Int. Cl. ³) |
|---|---|---|---|
| | | | G 02 F    1/17 |

Le présent rapport de recherche a été établi pour toutes les revendications

| Lieu de la recherche LA HAYE | Date d'achèvement de la recherche 10-08-1982 | Examinateur BORMS  F. |
|---|---|---|